# EUROPÄISCHE PATENTANMELDUNG

(11) **EP 1 083 468 A2**
(43) Veröffentlichungstag der Anmeldung: **14.03.2001**
(21) Anmeldenummer: 00117492.9
(22) Anmeldetag: 14.08.2000
(51) Int. Cl.: G05B 19/05

(54) **Speicherprogrammierbares Steuerungssystem**

(30) Priorität: 09.09.1999 DE 29915862 U
(71) Anmelder: Moeller GmbH, 53115 Bonn (DE)
(72) Erfinder: Klaes, Gernot, 53562 St. Katharinen (DE)

(57) **Zusammenfassung**

Die Erfindung betrifft ein speichprogrammierbares Steuerungssystem umfassend ein Basisgerät (2) mit Eingängen und Ausgängen, mit einer Recheneinheit zur logischen Verknüpfung der Eingangssignale nach einem Anwenderprogramm sowie mit einer Stromversorgungseinheit, und eine erste Gruppe von unmittelbar lokal an das Basisgerät (2) anschließbaren Erweiterungsgeräten (4). Die Erweiterungsgeräte (4) weisen hierbei keine eigene Recheneinheit für die Abarbeitung von Anwenderprogrammteilen auf. Das Basisgerät (2) und jedes Erweiterungsgerät (4) sind in Serie hintereinander angeordnet und über einen Datenbus zur parallelen Datenübertragung miteinander verbunden. Die Stromversorgungseinheit des Basisgerätes (2) ist ausschließlich für die Versorgung desselben ausgelegt. Gemäß der Erfindung weist das Steuerungssystem mindestens ein zusätzliches Stromversorgungsmodul (6) zur Stromversorgung einer ersten Gruppe von Erweiterungsgeräten (4) auf.

## Beschreibung

Die Erfindung betrifft ein speicherprogrammierbares Steuerungssystem gemäß dem Oberbegriff der unabhängigen Ansprüche.

Ein derartiges Steuerungssystem ist bereits aus der Firmendruckschrift der Anmelderin, "SUCOS Automation - Kompakt steuern und regeln", W 27-7332, Druckvermerk 3/94, bekannt. Hier wird ein Steuerungssystem beschrieben, welches sich zusammensetzt aus einer Kompaktsteuerung, die über lokale oder externe Erweiterungsmodule erweiterbar ist. Dabei ist die Kompaktsteuerung, bei Erweiterung über die lokalen Erweiterungsmodule, mit einem Netzteil zur Versorgung der maximal an die Steuerung anschließbaren lokalen Erweiterungen ausgestattet. Die Datenübertragung findet aus Geschwindigkeitsgründen parallel statt. Bei der Erweiterung der Steuerung über externe Erweiterungsmodule findet die Datenübertragung zwischen Kompaktsteuerung und Erweiterungsmodul seriell statt, um die bei längeren Übertragungsstrecken stärker auftretenden Störeinflüsse zu minimieren. Das externe Erweiterungsmodul, an das seinerseits wiederum lokale Erweiterungsmodule anschließbar sind, verfügt über ein eigenes Netzteil für die eigene und die Stromversorgung der anschließbaren lokalen Erweiterungsmodule.

Der Erfindung liegt die Aufgabe zugrunde, ein gattungsgemäßes Steuerungssystem zu schaffen, das eine Optimierung des Basisgerätes im Hinblick auf die Mindestanforderungen bezüglich Stromversorgung gewährleistet.

Ausgehend von einem Steuerungssystem der eingangs genannten Art wird die Aufgabe erfindungsgemäß durch die kennzeichnenden Merkmale der unabhängigen Ansprüche gelöst, während den abhängigen Ansprüchen vorteilhafte Weiterbildungen der Erfindung zu entnehmen sind.

Durch die Verwendung separater Stromversorgungsmodule kann das Basisgerät des Steuerungssystems mit einer kleineren und optimierten Stromversorgung ausgestattet werden. So wird mit Vorteil in dem erfindungsgemäßen Steuerungssystem nur soviel Energie zur Verfügung gestellt, wie auch tatsächlich benötigt wird.

Weitere Einzelheiten und Vorteile der Erfindung ergeben sich aus dem folgenden, anhand von Figuren erläuterten Ausführungsbeispiel. Es zeigen
- Figur 1:: ein Steuerungssystem gemäß dem Stand der Technik;
- Figur 2:: das erfindungsgemäße Steuerungssystem in einer ersten Ausführungsform;
- Figur 3:: das erfindungsgemäße Steuerungssystem in einer zweiten Ausführungsform, und
- Figur 4 und 5:: Detailausschnitte bezüglich der Anschlüsse gemäß Fig.3.

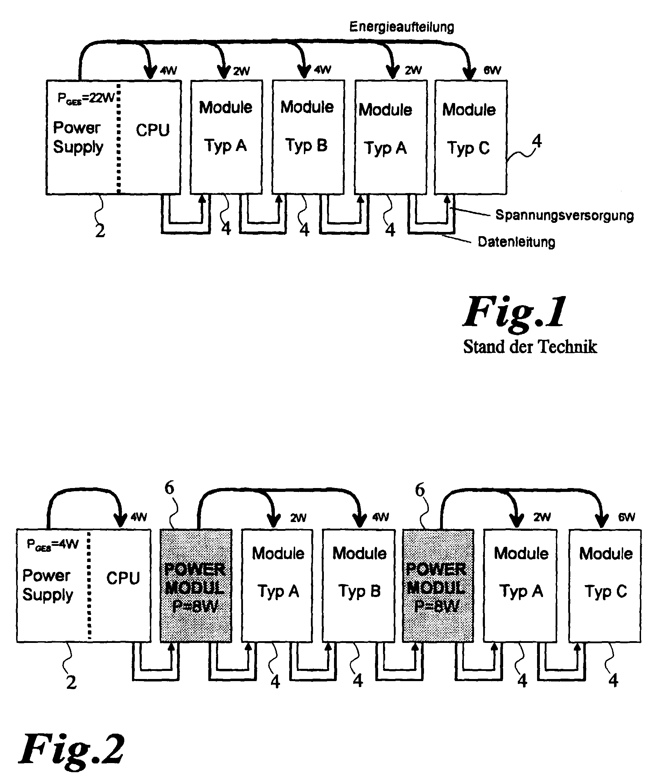

Nach Fig. 1 besteht ein gattungsgemäßes Steuerungssystem aus einem Basisgerät 2 in Form einer Kompaktsteuerung und mindestens einem, an das Basisgerät 2 anschließbaren, Erweiterungsgerät 4. Im dargestellten Beispiel sind vier Erweiterungsgeräte 4 mit unterschiedlichem Energieverbrauch an das Basisgerät 2 angeschlossen. Der gesamte Energiebedarf des Steuerungssystems wird dabei vom internen Netzteil des Basisgerätes 2 aufgebracht. Hierfür muß das Basisgerät 2 ein ausreichend groß dimensioniertes Netzteil aufweisen. Das Netzteil des Basisgerätes 2 muß daher immer für die maximal anschließbare Anzahl von Erweiterungsmodulen 4 ausgelegt sein. Dies hat zum Nachteil, daß zum einen, falls nicht die maximale Anzahl von Erweiterungsmodulen 4 an das Basisgerät 2 angeschlossen wird, zwangsweise ein zu großes und zu teueres Netzteil verwendet wird. Zum anderen wird im Basisgerät 2 immer entsprechende Verlustleistung erzeugt und somit Wärme produziert.

Fig.2 zeigt eine erste Ausführungsform des erfindungsgemäßen, modular aufgebauten, speicherprogrammierbaren Steuerungssystems. Das Steuerungssystem umfaßt ein Basisgerät in Form einer Kompaktsteuerung mit Signaleingängen und Signalausgängen, mit einer Recheneinheit zur logischen Verknüpfung der Eingangssignale und der Ausgabe der Ausgangssignale an die Signalausgänge nach einem Anwenderprogramm sowie eine integrierte Stromversorgungseinheit. Das Steuerungssystem umfaßt ferner eine erste Gruppe von unmittelbar lokal an das Basisgerät 2 anschließbaren Erweiterungsgeräten 4. Dabei sind das Basisgerät 2 und die Erweiterungsgeräte 4 über ein einziges gemeinsames Datenbussystem miteinander verbunden. Die Erweiterungsgeräte 4 werden mit Vorteil steckbar an die Kompaktsteuerung angekoppelt. Erweiterungsgeräte sind vorzugsweise Geräte ohne eine eigene Recheneinheit zur Abarbeitung von Teilen des Anwenderprogrammes wie zum Beispiel Ein- und Ausgangsbaugruppen zur Erweiterung der Anzahl von Ein- und Ausgängen, Zählerbaugruppen, Pneumatik- oder Hydraulikbaugruppen zum Anschluß derartiger Aktoren und Sensoren oder Anschlußmodule zum Anschluß an Datenverarbeitungsnetzwerke oder dergleichen. Die Kompaktsteuerung und die an diese angeschlossenen Erweiterungsgeräte 4 sind über einen Bus, insbesondere einen Paralleldatenbus, zur Datenübertragung miteinander verbunden. Durch die Verwendung eines parallelen Datenbusses können entsprechend schnelle Datenübertragungsraten erzielt werden. Erforderlich ist allerdings auch eine sichere Datenübertragung. Dies wird gewährleistet, indem die Kompaktsteuerung und die anzuschließenden Erweiterungsgeräte unter Verwendung kurzer Datenleitungswege miteinander verbunden sind. Dies wird gewährleistet, indem die Geräte vorzugsweise unmittelbar miteinander verrastbar sind und in unmittelbarer räumlicher Nähe auf einer Hutschiene montiert sind. Sollten geringere Datenübertragungsraten ausreichend sein, können die Geräte auch einheitlich über einen seriellen Datenbus verbunden werden.

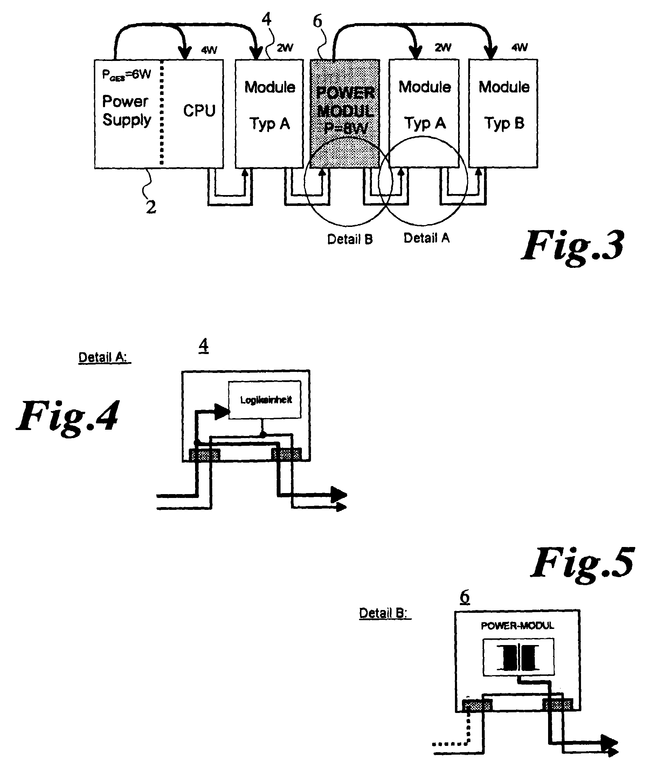

In der ersten Ausführung der Erfindung (Fig.2) weist das Basisgerät 2 ein Stromversorgungsmodul auf, welches derart dimensioniert ist, daß es nur das Basisgerät 2 selbst versorgen kann. Vorzugsweise findet ein entsprechend kleines Netzteil Verwendung, überschüssige Energie und Verlustwärme wird nicht erzeugt. Die Stromversorgung von lokalen Erweiterungsbaugruppen 4 erfolgt über ein erfindungsgemäßes separates Stromversorgungsmodul 6. Dieses Stromversorgungsmodul 6 ist für die Bereitstellung von einer bestimmten Leistung ausgelegt, so daß mittels diesem Modul eine bestimmte Anzahl von Erweiterungsgeräten 4 mit einer bestimmten Verbraucherleistung an das Steuerungssystem anschließbar sind.
Während der Anschluß bei einem Erweiterungsgerät 4 (Fig.4) erfolgt, indem sowohl die Datenbusleitung als auch die Energieversorgungsleitung durch das Erweiterungsgerät 4 durchgeschleift und hier entsprechend abgegriffen (angeschlossen) werden, kann der Anschluß eines Stromversorgungsmoduls 6 allein darin bestehen, daß weder Daten- noch Energieversorgungsleitung dem Modul zugeführt werden, dieses aber zumindest einen abgehenden Anschluß für einen neuen Energieversorgungsstrang zur Versorgung weiterer an das System anzuschließender Erweiterungsgeräte 4 aufweist (Fig. 5). Vorzugsweise wird das Stromversorgungsmodul 6, welches zumindest ein in einem Gehäuse angeordnetes Netzteil, Anschlüsse für die Netzversorgung des Netzteils sowie abgehende Anschlüsse für die Versorgung weiterer Erweiterungsgeräte 4 umfaßt, über eine Rastverbindung mit den Erweiterungsgeräten 4 beziehungsweise einem Erweiterungsgerät und der Kompaktsteuerung verbunden. Um eine einfache Verdrahtung und Verbindung der Einzelgeräte zu gewährleisten, kann auch die Datenbus- und/oder Energieversorgungsleitung an das Stromversorgungsmodul mechanisch gekoppelt, nicht aber elektrisch an dieses angeschlossen werden (Fig.5).

In einer zweiten Ausführungsform der Erfindung ist die Stromversorgung des Basisgerätes 2 derart ausgelegt, daß diese das Basisgerät 2 (Kompaktsteuerung) selbst und eine erste Gruppe (mindestens ein Erweiterungsgerät) von Erweiterungsgeräten 4 mit einer bestimmten Gesamtleistung versorgen kann und die Energieversorgung aller weiteren an das Steuerungssystem anzuschließenden Erweiterungsgeräte 4 (zweite Gruppe) über ein zusätzliches Stromversorgungsmodul 6 gewährleistet wird. Auch hierbei sind das Basisgerät und die Erweiterungsgeräte 4 über ein einziges gemeinsames Datenbussystem miteinander verbunden. Die Einbindung des Stromversorgungsmoduls 6 erfolgt in analoger Weise zur ersten Ausführungsform.

Die vorliegende Erfindung ist nicht auf die vorstehend beschriebenen Ausführungsformen beschränkt, sondern umfaßt auch alle im Sinne der Erfindung gleichwirkenden Ausführungsformen. Der an ein Basisgerät 2 ankoppelbare Gerätestrang kann durch die Erfindung beliebig erweitert werden, ohne das energieseitig Grenzen durch die maximale Leistung des Basisgerätes 2 vorgegeben sind. Jedes weitere ankoppelbare Stromversorgungsmodul 6 gewährleistet die Energieversorgung weiterer an das Basisgerät 2 anzuschließender Erweiterungsgeräte 4.

## Patentansprüche

1. Speichprogrammierbares Steuerungssystem umfassend
- ein Basisgerät (2) mit Eingängen und Ausgängen, mit einer Recheneinheit zur logischen Verknüpfung der Eingangssignale nach einem Anwenderprogramm sowie mit einer Stromversorgungseinheit, und
- eine erste Gruppe von an das Basisgerät (2) anschließbaren Erweiterungsgeräten (4), und
- wobei das Basisgerät (2) und jedes Erweiterungsgerät (4) in Serie hintereinander angeordnet über einen einzigen gemeinsamen Datenbus miteinander verbunden sind,
- wobei die Stromversorgungseinheit ausschließlich für die Versorgung des Basisgerätes (2) ausgelegt ist, und wobei
- mindestens ein zusätzliches Stromversorgungsmodul (6) zur Stromversorgung der ersten Gruppe von Erweiterungsgeräten (4) vorhanden ist.

2. Speichprogrammierbares Steuerungssystem umfassend
- ein Basisgerät (2) mit Eingängen und Ausgängen, mit einer Recheneinheit zur logischen Verknüpfung der Eingangssignale nach einem Anwenderprogramm sowie mit einer Stromversorgungseinheit, und
- eine erste Gruppe von an das Basisgerät (2) anschließbaren Erweiterungsgeräten (4), und
- wobei das Basisgerät (2) und jedes Erweiterungsgerät (4) in Serie hintereinander angeordnet über einen einzigen gemeisamen Datenbus und eine Energieversorgungsleitung miteinander verbunden sind, und
- wobei die Stromversorgungseinheit ausgelegt ist für die Versorgung von Basisgerät (2) und erster Gruppe von Erweiterungsgeräten (4), **gekennzeichnet durch**, mindestens ein zusätzliches Stromversorgungsmodul (6) zur Stromversorgung mindestens einer zweiten Gruppe von Erweiterungsgeräten (4).

3. Speichprogrammierbares Steuerungssystem nach einem der vorherigen Ansprüche, **gekennzeichnet durch** mindestens ein weiteres Stromversorgungsmodul (6) zur Stromversorgung einer weiteren Gruppe von Erweiterungsgeräten (4).

4. Speichprogrammierbares Steuerungssystem nach einem der vorherigen Ansprüche, **dadurch gekennzeichnet**, daß das Basisgerät (2) als Kompaktsteuerung ausgebildet ist.

5. Speichprogrammierbares Steuerungssystem nach einem der vorherigen Ansprüche, **dadurch gekennzeichnet**, daß das Basisgerät (2), das Erweiterungsgerät (4) und das Stromversorgungsmodul (6) unmittelbar räumlich benachbart, vorzugsweise nebeneinander auf einer Hutschiene, angeordnet sind.

6. Speichprogrammierbares Steuerungssystem nach einem der vorherigen Ansprüche, **dadurch gekennzeichnet**, daß das Basisgerät (2), das Erweiterungsgerät (4) und das Stromversorgungsmodul (6) kraft- und/oder formschlüssig miteinander verbindbar sind.

7. Speichprogrammierbares Steuerungssystem nach einem der vorherigen Ansprüche, **dadurch gekennzeichnet**, daß das Basisgerät (2), das Erweiterungsgerät (4) und das Stromversorgungsmodul (6) über eine steckbare Datenleitungsverbindung verbindbar sind.
